# EUROPEAN PATENT APPLICATION

(11) **EP 1 011 238 A2**
(43) Date of publication of application: **21.06.2000**
(21) Application number: 99111366.3
(22) Date of filing: 10.06.1999
(51) Int. Cl.: H04L 29/06, H04N 1/32

(54) **Network selection device**

(30) Priority: 18.11.1998 US 195575
(71) Applicant: HEWLETT-PACKARD COMPANY, Palo Alto, California 94304-1181 (US)
(72) Inventor: Whaley, Mark D., Boise Idaho 83642 (US); Wolf, John P., Eagle, Idaho 83616 (US)
(74) Representative: Schoppe, Fritz, Dipl.-Ing.

(57) **Abstract**

The present invention provides communication devices (10), communication systems, and methods of communicating data. According to one aspect of the present invention, a communication device (10) includes: a housing (12); a first input device (14) adapted to receive an input destination identifier to provide communications via a given network; a second input device (16) adapted to receive data to be communicated; processing circuitry (18) within the housing (12) and coupled with the first input device (14), and the processing circuitry (18) being configured to selectively direct the received data to an alternate network (54); and an interface (24) adapted to couple with the network and output the received data to the network.

## Description

### FIELD OF THE INVENTION

The present invention relates to communication devices, communication systems, and methods of communicating data.

### BACKGROUND OF THE INVENTION

Telecommunication technologies have enjoyed expansive growth with the emergence and increased popularity of related technologies. The desire to communicate numerous types of data at faster rates has fostered many of the advancements in this area of technology.

Products referred to as redialers or auto-redialers have been recently developed which perform functions with the aim of reducing costs in the area of telecommunications. In typical configurations, such devices are coupled intermediate the communicating device and a connection thereof with the local exchange carrier of a telephone network (e.g., Public Switched Telephone Network). The devices are usually configured to redirect inputted communications which were intended for communication via one carrier's network to another. Typically, such redirection operations are performed to reduce or minimize associated communication costs.

Conventional redialers or auto-redialers are used as an external appendage to an associated communication device. The redialer devices are usually placed between the telephone and the connection to the local exchange. In these configurations, the redialer devices are configured to sense or "sniff" the telephone line for dialed numbers to detect communications which should be redirected.

The conventional redialer configurations suffer from the drawback of being external of the associated communication device. As such, the additional hardware device occupies otherwise useable space and requires connection with the facsimile device. Often, service personnel or other technicians are required to couple the conventional redialer devices with the associated communication device. Additional issues of integrity of communicated data intermediate the additional hardware devices and added complexity are presented by the destination telephone numbers not being reliably interpreted in conventional redialer configurations. Further, noise may be injected upon the communication line by the external redialer device and associated couplings. In addition, external auto-redialers are forced to redial transmissions to alternate networks before the attached fax device times out.

Therefore, a need exists to provide an improved device which overcomes the shortcomings of the conventional devices.

### SUMMARY OF THE INVENTION

The present invention provides communication devices, communication systems, and methods of communicating data. According to a first aspect of the present invention, a communication device comprises: a housing; a first input device adapted to receive an input destination identifier to provide communications via a given network; a second input device adapted to receive data to be communicated; processing circuitry within the housing and coupled with the first input device, and the processing circuitry being configured to selectively direct the received data to an alternate network; and an interface adapted to couple with the network and/or forward the received data to the alternate network.

A second aspect of the present invention provides a communication system configured to communicate using a standard network and an alternate network, the communication system comprises: a source communication device adapted to output data to one of a standard network and an alternate network responsive to an inputted destination identifier; a destination communication device adapted to couple with the alternate network and configured to receive the data from the alternate network; and wherein the source communication device comprises an internal alternate network dialer configured to selectively direct the data to the alternate network responsive to the inputted destination identifier.

Another aspect of the present invention provides a method of communicating data comprising: providing a source communication device comprising a first input device, second input device, and an internal alternate network dialer; receiving data to be transmitted using the first input device; receiving a destination identifier using the second input device to communicate the data via a standard network; and directing the image to an alternate network using the alternate network dialer.

### DESCRIPTION OF THE DRAWINGS

Preferred embodiments of the invention are described below with reference to the following accompanying drawings.
Fig. 1 is an isometric view of a communication device according to one embodiment of the present invention.
Fig. 2 is a functional block diagram of the communication device shown in Fig. 1.
Fig. 3 is a functional block diagram illustrating the communication device coupled with associated networks providing a communication system.
Fig. 4 is an illustrative representation of memory of the source communication device.
Fig. 5 is a functional block diagram illustrating remote configuration functions of the communication device of the present invention.
Fig. 6 is a flow chart illustrating one process of remotely configuring the communication device.
Fig. 7 is a flow chart illustrating operation of the communication device in a facsimile using automatic dial mode.
Fig. 8 is a flow chart illustrating operation of the communication device in a facsimile using manual dial mode.
Fig. 9 is a flow chart illustrating operation of the communication device in a facsimile using personal computer application interface software.
Fig. 10 is a flow chart illustrating communications between the source communication device the communication device and an alternate network.
Fig. 11 and Fig. 12 comprise a flow chart illustrating communication of data via the alternate network.

### DETAILED DESCRIPTION OF THE INVENTION

This disclosure of the invention is submitted in furtherance of the constitutional purposes of the U.S. Patent Laws "to promote the progress of science and useful arts" (Article 1, Section 8).

The present invention is described with reference to communication devices and systems configured to transmit data, and methods for communicating data. Certain embodiments disclose telephony devices and systems, and telephony communication methods. In particular, the described embodiment discloses a facsimile communication device configured to communicate via an associated network. The described facsimile configuration is exemplary and the communication device of the present invention may be utilized in other applications, such as multi-function devices.

As utilized herein "facsimile device" refers to a dedicated stand-alone facsimile device, a personal computer configured to provide facsimile communications, or other devices adapted to provide facsimile communications.

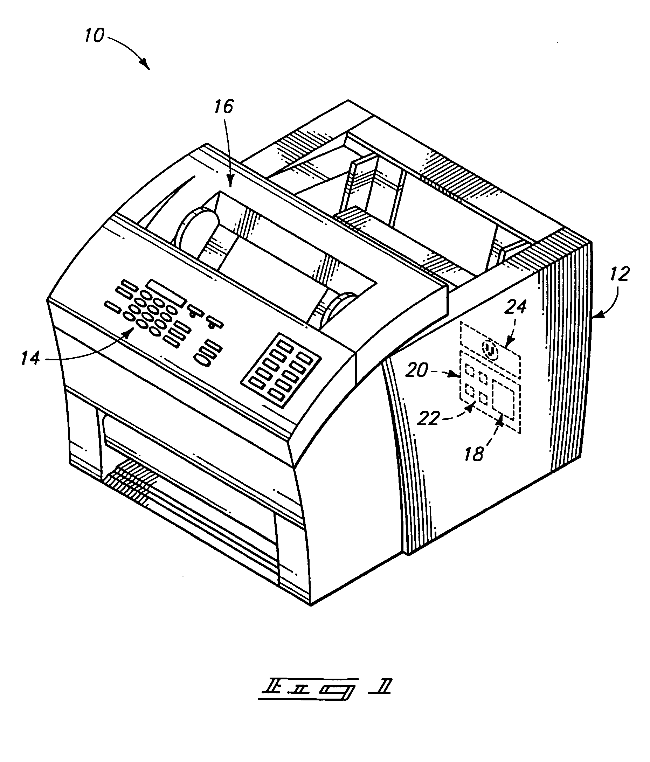

Referring to Fig. 1, an exemplary communication device 10 is illustrated. The depicted communication device is a facsimile device. Communication device 10 is preferably configured to provide real time and store and forward communications. Communication device 10 includes a housing 12 to conceal and protect internal components of the device.

The illustrated communication device 10 further includes a first input device 14 which can receive an input destination identifier such as an Email address, URL or destination facsimile number inputted by a user to provide communications via a given network. First input device 14 is a telephony keypad provided on a forward facing panel of housing 12.

Communication device 10 also includes a second input device 16 which receives data to be communicated. In the illustrated embodiment, second input device 16 is a scanner which can receive images to be communicated. Communication device 10 further includes processing circuitry 18 within housing 12. Processing circuitry 18, such as a central processing unit, is provided upon a printed circuit board (PCB) 20. Memory devices 22 are also provided upon printed circuit board 20. In the described embodiment, memory 22 is operable to store at least one reference number or pattern, the input destination identifier and received data to be communicated. Processing circuitry 18 is preferably coupled with first input device 14, and memory 22.

The depicted communication device 10 also includes an interface 24 shown internally within housing 12. Interface 24 can be implemented as a network connection unit or line interface unit. Interface 24 couples with at least one network (not shown in Fig. 1) and communicates data with the at least one network.

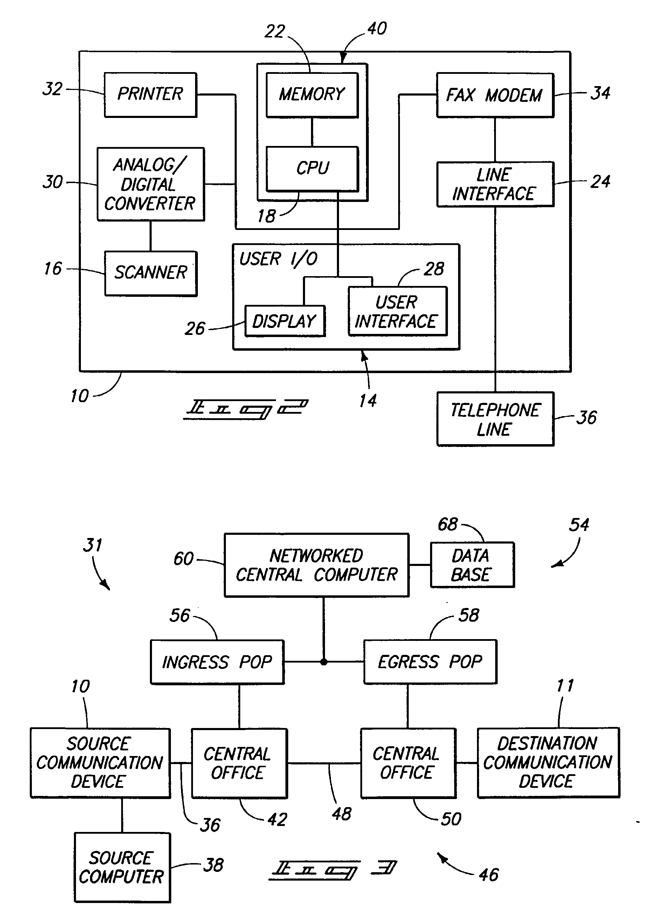

Referring to Fig. 2, additional components of communication device 10 are functionally illustrated. Processing circuitry 18 is shown coupled with memory 22 and user I/O 14. User I/O 14 includes a display 26 and user interface 28 in the illustrated embodiment. Display 26 outputs status information and other operational conditions of device 10 to a user. User interface 28 is provided in one embodiment to receive input destination identifiers (i.e., dialed numbers) from the user as well as any other programming inputs utilizing Dual Tone Multi-Frequency (DTMF) strings with synthesized voice. User interface 28 includes menu nav buttons, speed dial buttons, fax control buttons, and/or telephony keypad with alphabetical capabilities in one exemplary embodiment. For example, user interface 28 provides or prevents remote configuration access to the internal alternate network dialer (AND) described below in such embodiment.

Scanning second input device 16 is coupled with an analog/digital converter 30 in the depicted arrangement. Analog/digital converter 30 is operable to digitize scanned images or text inputted via scanner 16. The digitized images or data can be stored within memory 22 and selectively communicated outside of communication device 10 as described below. Communication device 10 also includes a printer 32 to provide hard copies of externally received communications. In addition, printer 32 can be utilized to provide current configurations of the internal alternate network dialer (AND) as well as exceptions which are experienced during operations of the alternate network dialer.

Communication device 10 includes a modem 34 coupled with interface 24. Interface 24 is coupled with an external communication media such as a telephone line 36 including a public switched telephone network (PSTN) in the described embodiment.

Communication device 10 includes an embedded or internal alternate network dialer (AND) 40 which transparently and selectively directs data to an alternate network responsive to an inputted destination identifier. Typically, communications with device 10 occur via a given network such as the public switched telephone network. However, if certain pre-programmed criteria are met, internal alternate network dialer 40 communicates data via an alternate network, such as a packet switched (X.25) network (e.g., the Internet).

In the depicted arrangement, object code is stored within memory 22. Processing circuitry 18 is configured by such software to implement the alternate network dialing functions. In particular, internal alternate network dialer 40 compares a destination identifier inputted by a user with at least one reference number stored within memory. Internal alternate network dialer 40 directs the data to an alternate network described below. Alternate network dialer 40 is provided within communication device 10 in the described embodiment.

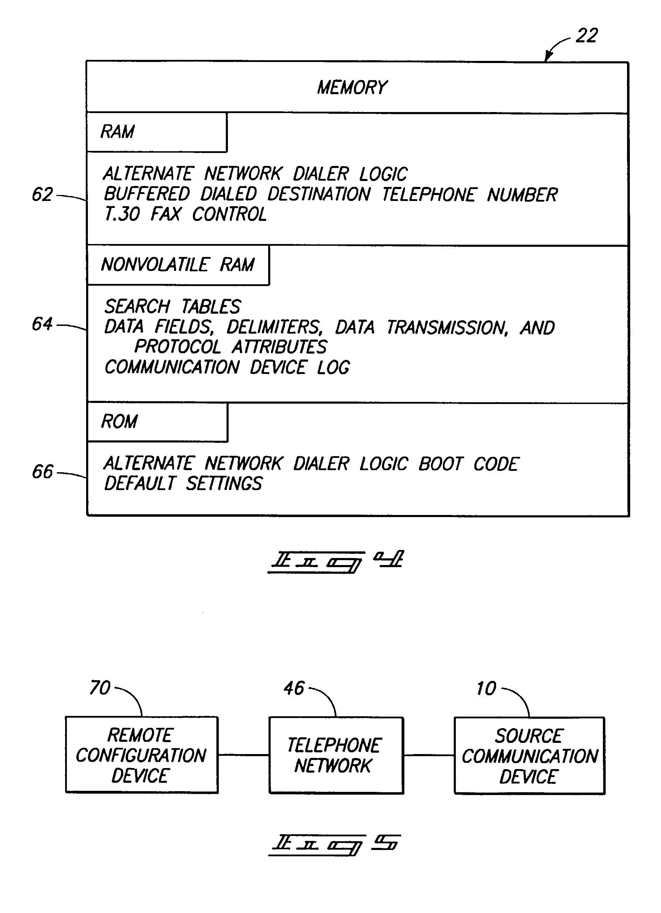

Referring to Fig. 3, communication device 10 is illustrated within a communication system 31. In the described embodiment, communication system 31 is a facsimile communication system. Other communication system configurations are possible.

Communication device 10 is implemented as a source communication device and is coupled with more than one network via telephone line 36. In some arrangements, communication device 10 is coupled with an external source computer 38 as shown in Fig. 3. Source computer 38 is a personal computer in one embodiment. Source computer 38 may be configured with software operable to initiate or receive facsimile communications. During transmission operations, source computer 38 can be utilized to receive the destination identifier inputted via a user. In other embodiments, source computer 38 is not provided or utilized during communications. Inputted destination identifiers are provided directly into source communication device 10 in such embodiments.

As shown in Fig. 3, the depicted source communication device 10 is coupled with a destination communication device 11 via more than one network as described below. For purposes of discussion herein, source communication device 10 outputs data to destination communication device 11 although it is to be understood that such communications are bi-directional in the preferred embodiment.

More than one network couple source communication device 10 with destination communication device 11. A first network 46, also referred to as a given or standard telephone network, includes central office 42 coupled with a communication line such as a public switched telephone network line 48 and another central office 50. Central office 50 is coupled with destination communication device 11.

During some communications, a user inputs a destination identifier via source communication device 10 which identifies destination communication device 11. Data is outputted via telephone line 36 to central office 42. In particular, source communication device 10 outputs data to the standard network responsive to the destination identifier inputted via the user. Central office 42 is a switching facility which provides the data via PSTN line 48 to the receiving central office 50. Thereafter, central office 50 outputs the communicated data to destination device 11 via a telephone line.

As shown, a second network 54, also referred to as an alternate network, is provided intermediate source communication device 10 and destination communication device 11. In the preferred embodiment, alternate network 54 is a packet switched network such as the public Internet or a privately owned network. Other configurations for alternate network 54 are possible. Alternate network 54 communicates data intermediate central offices 42, 50. Destination communication device 11 is coupled with central office 50 and receives communicated data from alternate network 54.

In the depicted arrangement, alternate network 54 includes an ingress point of presence (POP) 56 coupled with an egress POP 58. During communications described herein, data is received within alternate network 54 via ingress POP 56 from central office 42 and communication device 10. Data is communicated from ingress POP 56 to egress POP 58 within network 54. The data is outputted from egress POP 58 to central office 50 for communication to destination communication device 11.

Alternate network 54 also includes a networked control computer 60 coupled with ingress POP 56 and egress POP 58. In configurations wherein alternate network 54 is the Internet, ingress and egress POPs 56, 58 are individually Internet Protocol (IP) gateways. Network control computer 60 monitors communications intermediate plural POPs 56, 58 of network 54 and also provide confirmation operations as described below.

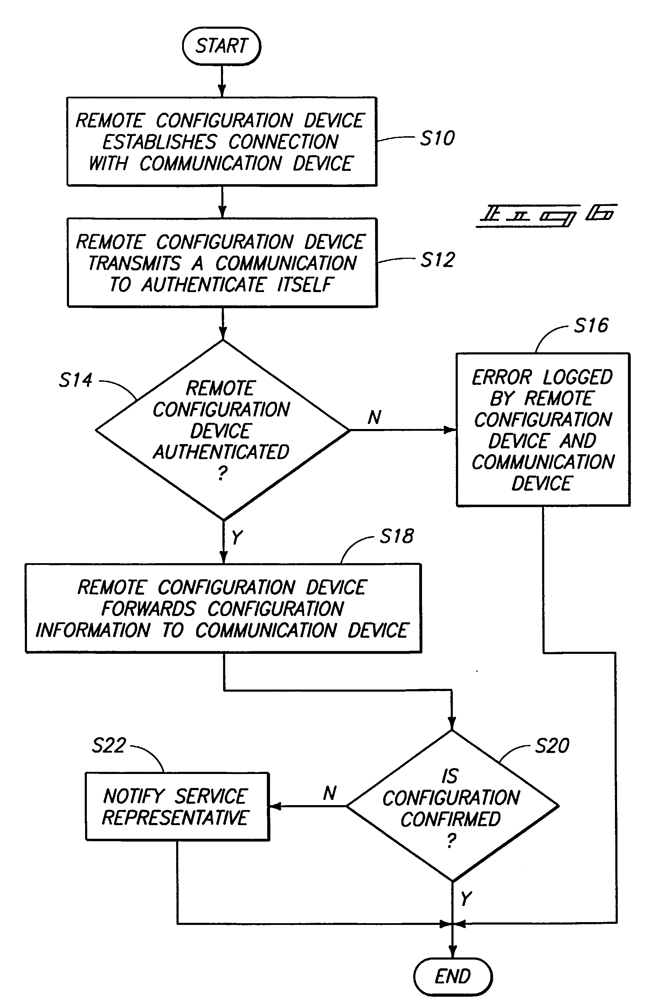

Referring to Fig. 4, various portions of memory 22 are illustrated. According to the preferred embodiment, memory 22 of communication device 10 includes read-access memory (RAM) 62, nonvolatile RAM memory 64 and read-only memory (ROM) 66. RAM memory 62 stores alternate network dialer logic which may be booted from ROM 66. Such alternate network dialer logic can include code to perform the following functions: test dialed destination telephone numbers against criteria or reference numbers; exchange data between communication device 10 and points of presence of alternate network 54; provide remote configuration functions; and exception handling of all of the above. RAM 62 can additionally be used to store buffered dialed destination identifiers inputted via user interface 28 of user I/O 14. In addition, RAM 62 provides ITU-T standard T.30 facsimile control in embodiments wherein communication device 10 provides facsimile communications.

Nonvolatile memory 64 stores search tables containing criteria to test dialed destination identifiers in order to determine when alternate network 54 is utilized. Nonvolatile memory 64 also stores data fields, delimiters, data transmission and other protocol attributes for data exchange intermediate communication device 10 and ingress POP 56 within alternate network 54. Furthermore, nonvolatile memory 64 provides a communication device log, such as a fax log in facsimile configurations. The fax log stores information regarding job identification numbers and status codes corresponding to the individual fax job. Further, the fax log tracks usage of alternate network 40 and associated monetary savings provided to the customer.

ROM memory 66 contains the logic to be booted into RAM 62 providing configurations for alternate network dialer 40. In addition, ROM memory 66 can contain default settings utilized by communication device 10. An exemplary default setting located within ROM 66 includes an authorization code to provide access of communication device 10 to network 54.

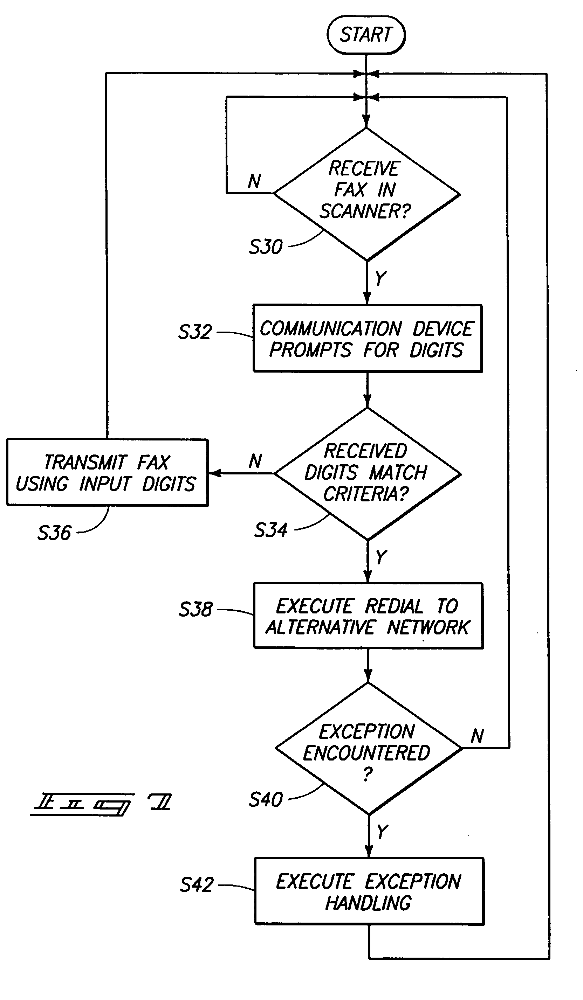

Referring to Fig. 5, remote configuration operations of communication device 10 are described in detail. A remote configuration device 70 can be coupled with communication device 10 via a telephone network 46 to provide remote configuration operations. In the described embodiment, processing circuitry 18 of communication device 10 couples with remote configuration device 70 and receives configuration instructions from remote configuration device 70. Remote configuration device 70 remotely configures communication device 10 responsive to a communication from communication device 10. Alternatively, device 70 can initiate the configuration procedure. In the described embodiment, devices 10, 70 communicate utilizing a Group 3 ITU-T T.30 nonstandard facilities call (NSF/NSS), T.434 communications, DTMF strings, or Email containing binary encoded configurations. Exemplary reprogramming methodologies include modular programming wherein portions of memory 22 are reprogrammed.

An exemplary remote configuration device 70 is a telephone facsimile device such as a Pentium personal computer running software NT4.0 available from Microsoft Corp. and a facsimile board available from Dialogic Corp. Alternatively, remote configuration device 70 is an Internet browser. Remote configuration device 70 preferably alters operational parameters of alternate network dialer 40 of communication device 10. Remote configuration device 70 can be a centralized unit which communicates with a plurality of communication devices 10, 11.

Additional operations can occur intermediate communication device 10 and remote configuration device 70. For example, communication device 10 can contact remote configuration device 70 and request supply needs, as well as communicate operational information such as usage statistics and encountered exceptions.

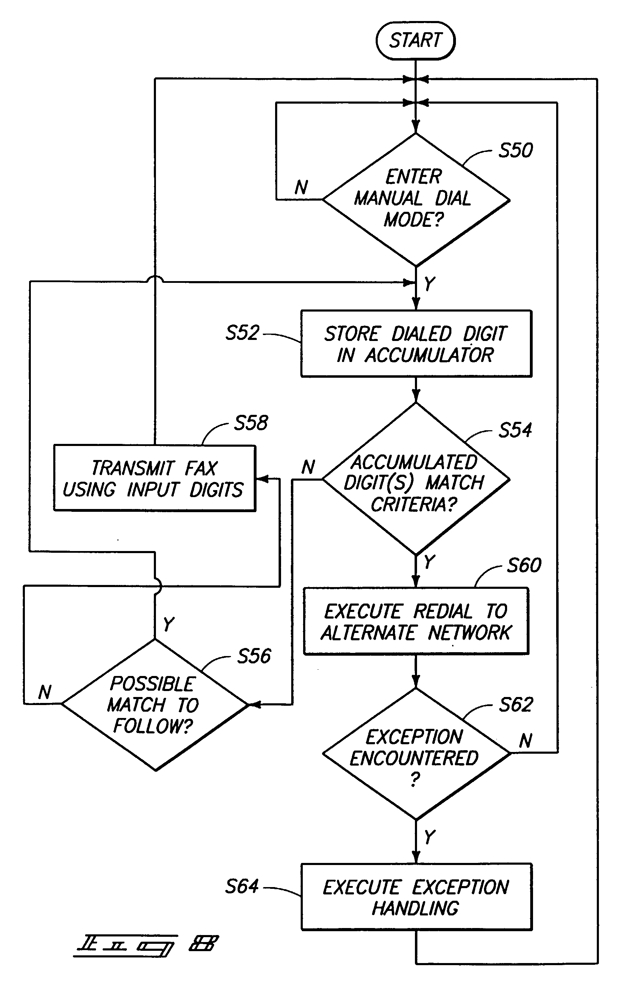

Referring to Fig. 6, further details according to one possible method of providing remote configuration operations are described. At step S10, remote configuration device 70 establishes a connection via telephone network 46 with communication device 10.

Following establishment of a communication connection at step S10, remote configuration device 70 transmits a communication to authenticate itself at step S12. Although step S12 is optional, it is preferred to provide the authentication operation for security. Proceeding to step S14, communication device 10 determines whether the transferred communication properly identifies remote configuration device 70. In typical arrangements, communication device 10 has prior knowledge of remote configuration device 70.

If the authentication fails, an error is logged by both communication device 10 and remote configuration device 70 at step S16. Such errors can be stored within respective facsimile logs of devices 10, 70 in facsimile configurations. If the proper authentication message is communicated from remote configuration device 70 to communication device 10, remote configuration device 70 thereafter forwards configuration information to communication device 10 at step S18. Such configuration information can include alternate network dialer protocol instructions, customer authorization code to permit communication device 10 to access the alternate network 40, operational parameters and settings, etc.

Following communication of the configuration information, communication device 10 performs a confirmation operation at step S20. Such can include a self-test wherein communication device 10 forwards a test fax to an ingress point of presence or IP gateway using the parameters which were just downloaded from remote configuration device 70. If the test transmission is successfully sent and received, the configuration is confirmed and communication device 10 is operable to provide communications via network 46 or alternate network 54. If an error is detected during the self-test performed in step S20, a service representative can be notified at step S22. Communication device 10 can proceed to operate utilizing default settings within ROM 66 if such an error is detected.

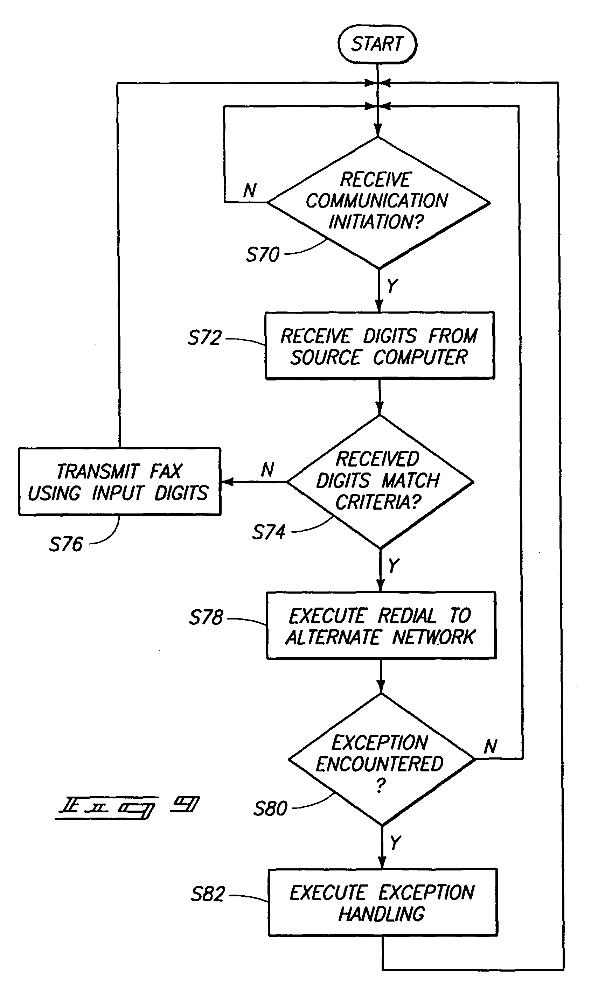

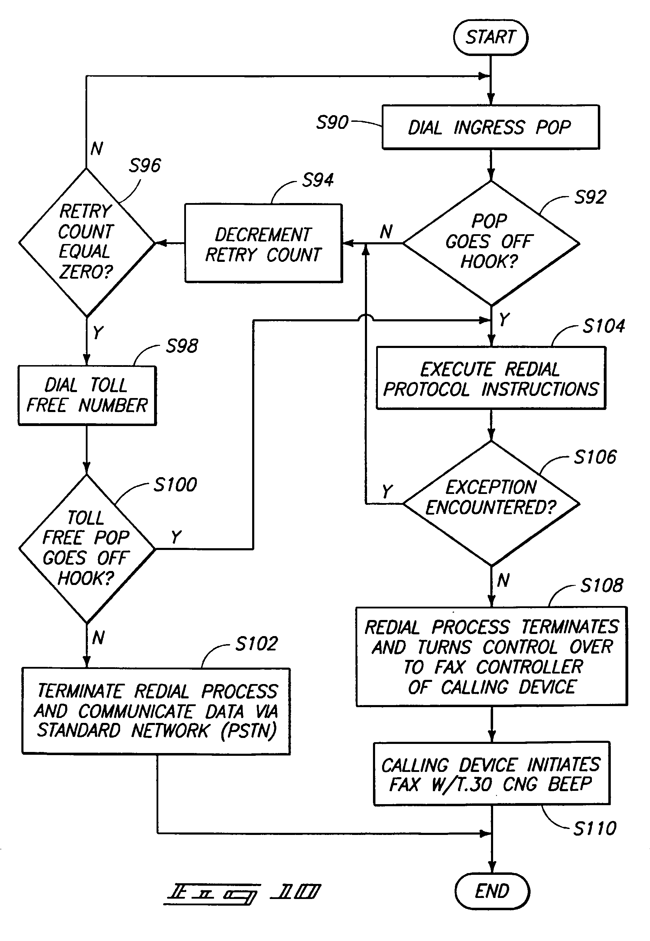

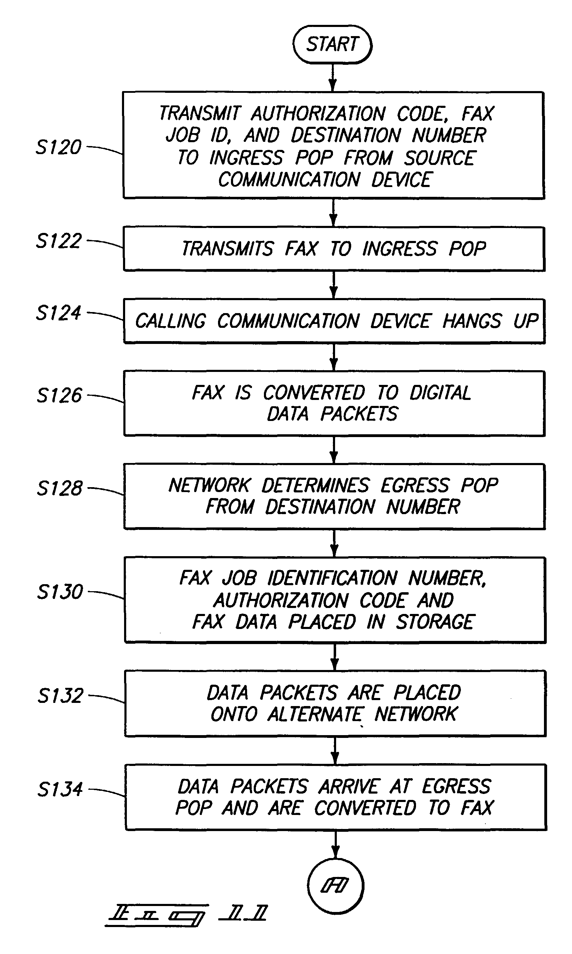

Referring to Fig. 7 - Fig. 9, methods are illustrated for determining whether a particular communication is directed to alternate network 40 or communicated via standard telephone network 46. Fig. 7 describes one methodology with reference to communication device 10 including a facsimile device operating in an automatic dial mode. Fig. 8 describes a methodology of communication device 10 including a facsimile device operating in a manual dial mode. Fig. 9 illustrates a methodology for communication device 10 operating as a facsimile device coupled with a source computer 38 which initiates a facsimile communication through device 10. Communication device 10 can enter any of the above-mentioned modes at any given time providing numerous communication options for a user of device 10 in accordance with the preferred embodiment.

Referring to Fig. 7, communication device 10 monitors for the reception of an image or communication within the scanner at step S30. Communication device 10 idles at step S30 until the images are inputted by the user or another mode of communication is selected. Following reception of data or the appropriate communication, processing circuitry 18 of communication device 10 proceeds to step S32 wherein communication device 10 prompts the user to enter digits corresponding to the destination identifier. Following entry of the input destination telephone number, the user typically presses the "start" or "fax" button. Thereafter, processing circuitry 18 proceeds to step S34 to compare the destination identifier inputted during step S32 to at least one reference number provided within the search table of nonvolatile memory 64. If the inputted destination identifier does not match one of the reference numbers, processing circuitry 18 proceeds to step S36 wherein the data (i.e., a facsimile in the described embodiment) is communicated using the inputted digits and standard telephone network 46. Thereafter, processor 18 returns to step S30 to monitor for the reception of a subsequent data image.

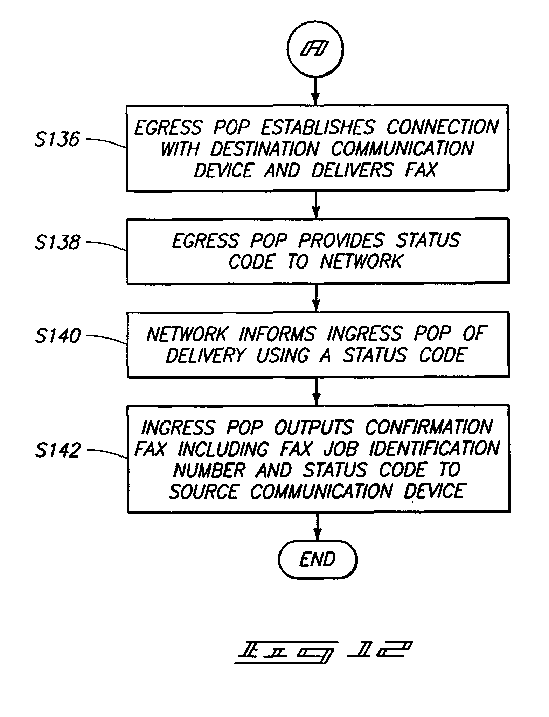

Provided the inputted destination identifier matches at least one reference number of the criteria table stored within nonvolatile memory 64 at step S34, a redial operation to alternate network 54 is executed using alternate network dialer 40 at step S38. More specifically, processing circuitry 18 of dialer 40 directs the data to be communicated to alternate network 54 responsive to the comparison performed in step S34. The data is thereafter communicated to destination communication device 11 using alternate network 54 as described below with reference to Fig. 10, Fig. 11 and Fig. 12. In particular, a customer authorization code, fax job ID number, destination fax telephone number and facsimile transmission can be communicated to alternate network 54.

At step S40, processing circuitry 18 monitors for the presence of an exception during communications via alternate network 54. An exception can be defined as any unexpected occurrence during communications via alternate network 54. Such can include detection of a busy signal or a no answer signal, a time out condition responsive to improper connection with ingress POP 56, detection of communication errors, etc. Exception handling occurs in step S42 responsive to the detection of an exception in step S40. Exemplary exception handling includes dialing a toll-free access number of alternate network 54 to establish communications. Occurrence of an exception may be stored within fax log of nonvolatile memory 64. If no exception is encountered in step S40, processing circuitry 18 returns directly to step S30 to monitor for the presence of an image within the scanner.

Referring to Fig. 8, communication device 10 monitors for a request to enter manual dial mode at step S50. Such a request is typically entered by a user at user interface 28 or via source computer 38 coupled with device 10 (if computer 38 is present). Communication device 10 idles at step S50 until such a request is received.

Following reception of the manual dial mode request at step S50, communication device 10 stores received digits including the destination identifier from user interface 28 or computer 38 within an accumulator which can be provided within RAM 62. Following the reception of the first digit, processing circuitry 18 proceeds to step S54 to compare the accumulated digit(s) to at least one reference number provided within the search table of nonvolatile memory 64.

If the accumulated digit(s) do not match one of the reference numbers, processing circuitry 18 proceeds to step S56 wherein it is determined whether a match of the accumulated digit(s) with one of the reference numbers is possible. Data is communicated using the inputted digits and the standard telephone network 46 at step S58 if no match is possible as determined from step S56. Thereafter, processor 18 returns to step S50 to monitor for the reception of a subsequent transmission request within the manual dial mode.

If a match is possible at step S56, processing circuitry 18 proceeds to step S52 to receive additional dialed digits within the accumulator. The subsequently accumulated digits are compared at step S54 for a match. If no match of the received digits is yet known, processing circuitry 18 proceeds to step S56 to determine again whether a match is possible. Such repeats until a sufficient number of digits are entered to determine whether there is a match or no match of the destination identifier with at least one reference number stored within nonvolatile memory 64.

Processing circuitry 18 proceeds to step S60 to perform a redial operation to alternate network 54 responsive to a match being determined at step S54. Processing circuitry 18 including the internal alternate network dialer 40 directs the data to alternate network 54 responsive to a match being found. The data is thereafter communicated to destination communication device 11 utilizing alternate network 54 as described below.

Next, processing circuitry 18 proceeds to step S62 wherein monitoring for the presence of an exception occurs. Exception handling is executed in step S64 responsive to the detection of an exception in step S62. If no exception is encountered in step S62, processing circuitry 18 returns to step S50 to monitor for the presence of another communication initiation.

Referring to Fig. 9, processing circuitry 18 of communication device 10 monitors for the reception of an initiate software command or other communication initiation from source computer 38 at step S70. Communication device 10 idles at step S70 until such a command is received. Following reception of the command, processing circuitry 18 of communication device 10 proceeds to step S72. Source computer 38 prompts the user for digits corresponding to the destination identifier. Following entry of the input destination telephone number, the user typically presses the "Send Fax" button within computer 38 which downloads the destination identifier digits to communication device 10 and processing circuitry 18.

Thereafter, processing circuitry 18 proceeds to step S74 to compare the input destination identifier received during step S72 to the criteria including at least one reference number provided within the search table of nonvolatile memory 64. If the inputted destination identifier does not match one of the reference numbers, processing circuitry 18 proceeds to step S76 wherein the data is communicated to destination communication device 11 using standard network 46 and the inputted digits. Thereafter, processor 18 returns to step S70 to monitor for the reception of a communication initiation from computer 38.

Provided the inputted destination identifier matches at least one reference number of the criteria table stored within nonvolatile memory 64 at step S74, a redial operation to alternate network 54 is executed at step S78. More specifically, processing circuitry 18 directs the data to alternate network 54 responsive to the comparison performed in step S74. The data is thereafter communicated to destination communication device 11 utilizing alternate network 54.

Next, processing circuitry 18 proceeds to step S80 wherein monitoring for the presence of an exception occurs. Exception handling is executed in step S84 responsive to the detection of an exception in step S80. If no exception is encountered in step S80, processing circuitry 18 returns to step S70 to monitor for the presence of another communication initiation.

Referring to Fig. 10, one process of performing a redial to alternate network 54 is described. As mentioned above, alternate network dialer 40 implements the redial process responsive to a match of the destination identifier inputted by the user with a reference number provided within the search table stored within nonvolatile memory 64.

At step S90, processing circuitry 18 of communication device 10 instructs fax modem 34 to dial ingress POP 56 within alternate network 54. At step S92, processing circuitry 18 monitors to determine whether ingress POP 56 has gone off hook. If ingress POP 56 fails to go off hook, step S94 is executed wherein a retry count within communication device 10 is decremented. Thereafter, processing circuitry 18 proceeds to step S96 to determine whether the retry count is equal to zero. If the retry count is not equal to zero, processing circuitry 18 proceeds to step S90 to redial ingress POP 56. If the retry count is equal to zero, processing circuitry 18 proceeds to step S98 to dial a toll free number or other access number for another more centralized ingress POP for alternate network 54. Such a toll free number can be provided by the same provider of the alternate network. Exemplary Internet fax service providers include FaxSav and UUNET. The toll free number provides additional access to the alternate network.

In some configurations, alternate network dialer 40 monitors the activity of ingress POP 56. Alternate network dialer 40 dials another ingress POP or the toll free number if ingress POP 56 is busy or detects a "no answer." At step S100, processing circuitry 18 determines whether the toll free POP has gone off hook. If the toll free POP fails to go off hook, processing circuitry 18 proceeds to step S102 and the radial process is terminated and communications occur via standard network 46. Alternatively, alternate network dialer 40 including processing circuitry 18 attempts a plurality of times to reach the toll free number to utilize alternate network 54.

If at step S100, the toll free point of presence does go off hook, processing circuitry 18 proceeds to step S104 to execute radial protocol instructions. At step S104, communications with IP gateway including ingress POP 56 occur. Such protocol instructions can include passing the customer authentication code enabling access to alternate network 54, passing the buffered destination fax telephone number and fax job ID number generated by communication device 10. Thereafter, the alternate network dialing process terminates and T.30 communications proceed intermediate communication device 10 and ingress POP 56.

At step S106, processing circuitry 18 monitors for the occurrence of an exception during communications. Such can include an error within the data exchange. If an exception occurs during communications, processing circuitry 18 proceeds to step S94 to decrement the retry count and proceed to step S90 to dial ingress POP 56 or dial a toll free number for the Internet service provider at step S98.

If no exception is detected at step S106, processing circuitry 18 proceeds to step S108 where the redial process is complete and the process terminates. Control of the communications is turned over to the fax controller of the calling communication device. At step S110, the calling communication device 10 initiates the fax communication with a CNG beep (calling tone) which indicates the following data is facsimile data.

Referring to Fig. 11 and Fig. 12, communications within alternate network 54 are described. At step S120, authorization code, fax job ID and destination identifier information is communicated to ingress POP 56 from source communication device 10 as previously described. At step S122, the facsimile transmission is communicated to ingress POP 56. Thereafter, communication device 10 hangs up the present connection at step S124 enabling other communications to be made with communication device 10.

The uploaded facsimile data is converted to digital data packets within ingress POP 56 at step S126. Utilizing the carriers network control computer 60, network 54 determines the appropriate egress POP from the uploaded destination identifier from communication device 10 at step S128. In certain embodiments, look-up tables or data bases can be utilized to determine the appropriate egress POP 58 for completing the communication. Thereafter, the fax job identification number, authorization code and accounting statistics related to faxed data is placed into internal data base 68 of network 54 by the carrier's network control computer 60 at step S130. In addition, the number of pages within the fax can be included within the accounting statistics data stored within data base 68.

At step S132, ingress POP 56 associates the created data packets with the destination address and places the data packets onto alternate network 54. The data packets including the communicated data are transmitted across alternate network 54 and arrive at egress POP 58 wherein they are converted back to the fax data or other communication data at step 134. Thereafter, egress POP 58 utilizes the communicated destination identifier and establishes connection with destination communication device 11 at step S136. Following the establishment of the connection with destination communication device 11, the fax or other communicated data is delivered.

At step S138, egress POP 58 generates and forwards status code information to the carrier's network control computer 60 of alternate network 54. Such status code information can include confirmation information such as: delivery success, no answer information, a busy indication, and communication error indication. Other status codes are possible. Subsequently, central network computer 60 of alternate network 54 informs ingress POP 56 of delivery information using the appropriate status code and associates the status code to the corresponding fax job ID at step S140.

Ingress POP 56 of alternate network 54 outputs a confirmation fax including fax job identification number and the appropriate status code or message regarding the status of the communicated data to source communication device 10 at step S142. Such data can be communicated utilizing a Group 3 nonstandard facilities call (NSF/NSS), DTMF or ITU-T T.434 standard. This provides the sending entity with information regarding delivery of the data or facsimile transmission. In particular, communication of the data to destination communication device 11 may be confirmed.

In compliance with the statute, the invention has been described in language more or less specific as to structural and methodical features. It is to be understood, however, that the invention is not limited to the specific features shown and described, since the means herein disclosed comprise preferred forms of putting the invention into effect. The invention is, therefore, claimed in any of its forms or modifications within the proper scope of the appended claims appropriately interpreted in accordance with the doctrine of equivalents.

## Claims

1. A communication device (10) comprising:
a housing (12);
a first input device (14) adapted to receive an input destination identifier to provide communications via a given network;
a second input device (16) adapted to receive data to be communicated;
processing circuitry (18) within the housing (12) and coupled with the first input device (14), and the processing circuitry (18) being configured to selectively direct the received data to an alternate network (54); and
an interface (24) adapted to couple with the alternate network (54) and output the received data to the alternate network (54).

2. The communication device (10) according to claim 1 further comprising memory (22) coupled with the processing circuitry (18) and configured to store at least one reference number, the input destination identifier and the received data.

3. The communication device (10) according to claim 2 wherein the processing circuitry (18) is configured to compare the input destination identifier with the at least one reference number.

4. The communication device (10) according to claim 3 wherein the processing circuitry (18) is configured to direct the data to the alternate network (54) responsive to the comparison.

5. The communication device (10) according to claims 1, 2, 3, or 4 wherein the processing circuitry (18) is adapted to couple with a remote configuration device (70) and at least one of receive configuration instructions from the remote configuration device (70) and provide operational information to the remote configuration device (70).

6. The communication device (10) according to claims 1, 2, 3, 4, or 5 wherein the communication device (10) comprises a facsimile device.

7. The communication device (10) according to claims 1, 2, 3, 4, 5, or 6 wherein the processing circuitry (18) comprises an alternate network dialer (40).

8. A method of communicating data comprising:
providing a source communication device (10) comprising a first input device (14), a second input device (16), and an internal alternate network dialer (40);
receiving data to be transmitted using the first input device (14);
receiving a destination identifier using the second input device (16) to communicate the data via a standard network (46); and
directing the data to an alternate network (54) using the alternate network dialer (40).

9. The method according to claim 8 further comprising comparing the destination identifier with at least one reference number and the directing being responsive to the comparing.

10. The method according to claims 8 or 9 wherein the method comprises a method of communicating a facsimile.
